# EUROPEAN PATENT SPECIFICATION

(11) **EP 3 184 684 B1**
(45) Date of publication and mention of the grant of the patent: **12.09.2018**
(21) Application number: 16200847.8
(22) Date of filing: 28.11.2016
(51) Int. Cl.: D06B 23/04, B65G 21/22, B65G 23/14

(54) **MACHINE FOR FABRIC DYEING AND/OR FINISHING COMPRISING A CONVEYOR DRIVEN SYSTEM**
TEXTILFÄRBUNGS- UND/ODER -VEREDELUNGSMASCHINE MIT FÖRDERERBETRIEBENEM SYSTEM
MACHINE DE TEINTURE ET/OU DE FINITION DE TISSU AVEC CONVOYEUR D'ENTRAÎNEMENT

(30) Priority: 22.12.2015 CN 201521077345 U
(43) Date of publication of application: 28.06.2017
(73) Proprietor: Chang, Chi-Lung, Taoyuan City (TW)
(72) Inventor: Chang, Chi-Lung, Taoyuan City (TW)
(74) Representative: Horak, Michael

(56) References cited:
- DE-U1- 7 705 360
- DE-U1- 20 310 084
- US-A- 3 985 225
- US-A- 5 261 527
- US-A1- 2011 042 183

## Description

### (a) Technical Field of the Invention

The present invention relates to a machine for fabric dyeing and/or finishing equipped with a conveyor system to transfer fabric, and more particularly to a conveyor supporting device, having one or more support chains configured under the conveyor, one side of said support chain running with its chain roller on a support rail, and another side thereof supporting the conveyor directly with its support seat in such a way to run with the supported conveyor simultaneously. Both the conveyor and conveyor supporting device are running synchronously (at the same speed) so that the friction generated between the conveyor and supporting device can be avoided completely.

### (b) Description of the Prior Art

The conveyors of conventional conveyor dyeing or finishing machines are normally flexibly caused to be sagged or undulated upon due to the weight of fabric upon the transportation of the fabric. Therefore, to overcome the disadvantage mention above, a support device, for example, a fixed wear-down support or rows of rolling wheels are configured under the conveyor, making the conveyor run stably. However, not only the wear-down material needs a periodic replacement due to the wear thereof, but the conveyor itself may also need a replacement due to the wear thereof. Although the rolling wheel may not cause the wear of the conveyor, the spaces of the rolls may cause the flexible conveyor to run up and down.

Patent documents of prior art are known, such as US 5 216 527 A and DE 77 05 360 U1. US 5 216 527 A teaches a support conveyor belt provided to support a primary conveyor belt. However, the support conveyor belt does not include support seats to increase a support area to the primary conveyor belt. DE 77 05 360 U1 teaches a dyeing machine comprising a belt conveyor, which, however, does not include a support chain having support seats to increase a support area to the belt conveyor.

### SUMMARY OF THE INVENTION

The object of the present invention is to provide a machine for fabric dyeing and/or finishing provided with a conveyor driven system including a conveyor and a conveyor supporting device, said conveyor supporting device having one or more support chains configured under the conveyor, one side of the support chain running on a support rail, and another side thereof supporting the conveyor directly and being capable of running with the supported conveyor simultaneously, both running synchronously in such a way to prevent the conveyor from generating friction with the support device due to the relative motion between the conveyor and chain (caused by the condition that the speed of the conveyor is different from the one of the chain), allow the conveyor itself to become a permanent component forever free from replacement. Especially, the support side of the support chains preferably has support seats so that the support can be more stable and the conveyor can run more smoothly. The above mentioned object is solved by a machine according to claim 1.

### BRIEF DESCRIPTION OF THE DRAWINGS

FIG 1 is a schematic view of a conveyor supporting structure according to the present invention;
FIG. 2 is a partly enlarged schematic view of FIG. 1; and
FIG. 3 is a cross-sectional view thereof taken along line A-A' of FIG. 1.

### DETAILED DESCRIPTION OF THE PREFERRED EMBODIMENTS

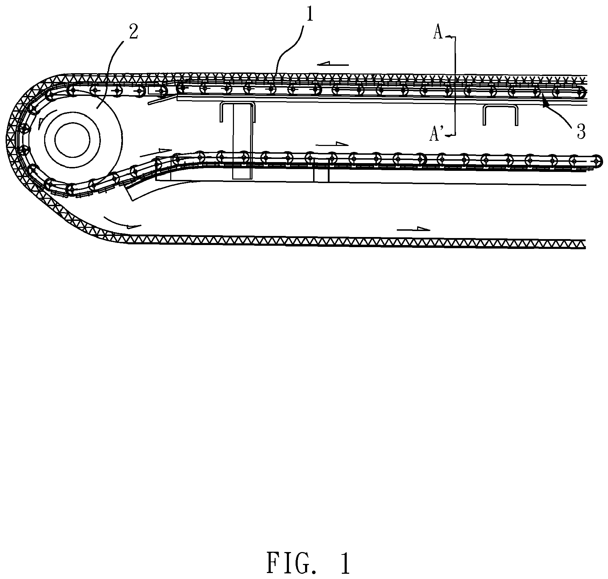

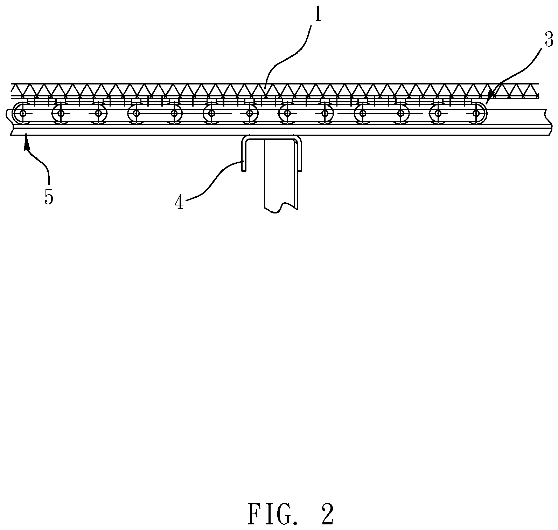

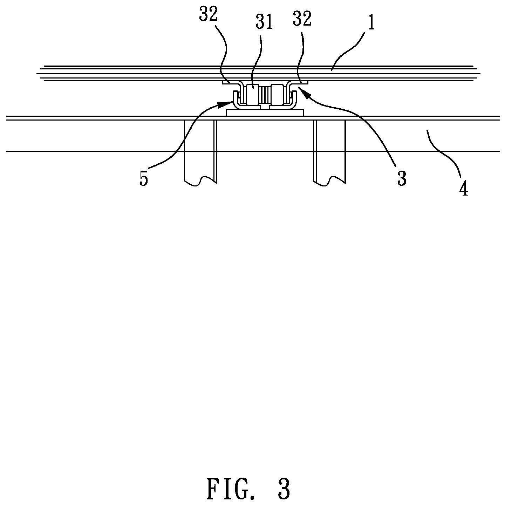

Referring to FIGS. 1 to 3, which respectively show a conveyor supporting structure according to the present invention, one or more support chains 3 having support seats 32 and support chain rollers 31 are configured under a conveyor 1, where one side of the support chain 3 runs on a support rail 5 with the support chain rollers 31, the support rail 5 being fixed to a support rail retaining stand 4, and another side of the support chain 3 supports the conveyor 1 directly with the support seats 32 and can run with the supported conveyor 1 simultaneously in such a way that when the conveyor 1 is driven by a driving roller 2 to run, the sliding friction generated between the conveyor 1 and support chain 3 can be avoided completely. Therefore, the conveyor 1 becomes a permanent component forever free from replacement and runs smoothly, and the life of the machine can further be prolonged.

## Claims

1. Machine for fabric dyeing and/or finishing provided with a conveyor driven system to transport fabrics, said conveyor driven system including a conveyor (1) and a conveyor supporting device (3,5), **characterized in that** said conveyor driven system has one or more support chains (3) configured under said conveyor (1), one side of said support chain (3) running on a support rail (5), and another side thereof supporting said conveyor (1) directly and running with said supported conveyor (1) synchronically, running speeds thereof being the same, and a support face of said support chain (3) having support seats (32) that support said conveyor (1) more stably by increasing a support area to said conveyor (1) with said support seats (32).

## Patentansprüche

1. Textilfärbungs- und/oder Veredelungsmaschine mit fördererbetriebenem System zum Transport von Textilien, wobei das besagte fördererbetriebene System ein Förderband (1) und eine Förderstützvorrichtung (3, 5) beinhaltet, **dadurch gekennzeichnet, dass** das fördererbetriebene System eine oder mehrere Stützketten (3) aufweist, die unter dem besagten Förderband (1) angeordnet sind, wobei eine Seite der besagten Stützkette (3) auf einer Stützschiene (5) verläuft und eine andere Seite davon das besagte Förderband (1) direkt stützt und synchron mit besagtem, gestützten Förderband (1) läuft, wobei die Laufgeschwindigkeiten davon gleich sind und eine Stützfläche von besagter Stützkette (3) Stützsitze (32) aufweist, die das Förderband (1) stabiler stützen, indem ein Stützbereich zu besagtem Förderband (1) mit besagten Stützsitzen (32) vergrößert wird.

## Revendications

1. Machine de teinture et/ou de finition de tissu pourvue d'un système entraîné par convoyeur pour transporter des tissus, ledit système entraîné par convoyeur comprenant un convoyeur (1) et un dispositif de support de convoyeur (3, 5), **caractérisé en ce que** ledit système entraîné par convoyeur a une ou plusieurs chaînes de support (3) configurées sous ledit convoyeur (1), un côté de ladite chaîne de support (3) circulant sur un rail de support (5), et un autre côté de celle-ci supportant ledit convoyeur (1) directement et circulant avec ledit convoyeur supporté (1) synchroniquement, leurs vitesses de circulation étant identiques, et une face de support de ladite chaîne de support (3) ayant des sièges de support (32) qui supportent ledit convoyeur (1) de manière plus stable en augmentant une zone de support audit transporteur (1) avec lesdits sièges de support (32).
